# EUROPÄISCHE PATENTSCHRIFT

(11) **EP 0 805 293 B1**
(45) Veröffentlichungstag und Bekanntmachung des Hinweises auf die Patenterteilung: **12.09.2001**
(21) Anmeldenummer: 97106333.4
(22) Anmeldetag: 17.04.1997
(51) Int. Cl.: F16H 63/14

(54) **Schaltvorrichtung mit Überschaltsperre**
Gear change mechanism with a device preventing an over-change
Sélecteur de vitesse avec dispositif pour limiter le débattement du sélecteur

(30) Priorität: 04.05.1996 DE 19617988
(43) Veröffentlichungstag der Anmeldung: 05.11.1997
(73) Patentinhaber: Dr.Ing.h.c. F. Porsche Aktiengesellschaft, 70435 Stuttgart (DE)
(72) Erfinder: Fuchs, Robert, 75446 Wiernsheim (DE); Sander, Edmund, 71229 Leonberg (DE)

(56) Entgegenhaltungen:
- DE-A- 2 311 319
- DE-A- 2 328 306
- DE-A- 2 826 040
- DE-C- 907 249

## Beschreibung

Die Erfindung betrifft eine Schaltvorrichtung mit Überschaltsperre für ein mehrgängiges Wechselgetriebe eines Kraftfahrzeuges nach der Gattung des Hauptanspruches.

Derartige Schaltvorrichtungen werden in steigendem Maße für Personenkraftwagen mit sequenzieller, manueller Schaltbetätigung vorgesehen, bei denen ein Schalthebel im Inneren des Personenkraftwagens über Seilzüge, Hebeelemente oder ähnliches mit der Schaltvorrichtung gekoppelt sind. Darüber hinaus werden derartige Schaltvorrichtungen insbesondere bei Zweirad-Kraftfahrzeugen eingesetzt, bei denen der schwenkbare Schaltarm direkt oder indirekt mit einem fußbetätigten Schalthebel verbunden ist. Eine derartige Schaltvorrichtung ist beispielsweise in der DE 28 26 040 C2 beschrieben.

Die Schaltwelle dieser gattungsgemäßen Schaltvorrichtung wird schrittweise durch einen schwenkbaren Schaltarm verdreht, der über ein Schaltglied mit Betätigungselementen an Mitnahmeelementen der Schaltwelle bzw. der Schaltwalze angreift. Am Schaltglied ist darüber hinaus ein Ausleger mit einem Sperrglied befestigt, der bei Erreichen der Endstellung der Schaltbewegung des Schaltarmes zwischen zwei Mitnahmeelementen der Schaltwalze bewegt wird. Durch diesen Ausleger mit Sperrglied wird ein ungewolltes Weiterdrehen der Schaltwelle aufgrund ihrer Trägheit verhindert, indem das Sperrglied des Auslegers so ausgebildet und positioniert ist, daß es am jeweiligen Mitnahmelement anliegt und so ein Weiterdrehen der Schaltwalze verhindert wird. Dieser Ausleger verhindert im Zusammenwirken mit jeweils einem Mitnahmeelement der Schaltwalze gleichzeitig ein vom Fahrer verursachtes Weiterschwenken über eine vorgegebene Drehstellung hinaus. Um das vom Fahrer verursachte Weiterschwenken der Schaltwelle zu verhindern, muß aufgrund der sehr viel höheren Kräfte im Vergleich zum trägheitsbedingten Weiterschwenken eine sehr massive und damit aufwendige und teure Ausbildung gewählt werden, da ansonsten ein Verbiegen des Auslegers nicht auszuschließen ist.

Demgegenüber ist es Aufgabe der Erfindung, eine Schaltvorrichtung mit Überschaltsperre so zu verbesserm, daß ein mechanisches Weiterdrehen der Schaltwelle ohne bauliche Maßnahmen am Getriebegehäuse und/oder Schalthebel zur Betätigung des Schaltarmes verhindert wird. Weiterhin sollen die insbesondere beim mechanischen Weiterdrehen auftretenden Kräfte aufgenommen werden können, ohne daß die Gefahr des Verbiegens auftritt bzw. eine sehr massive Ausbildung erforderlich ist.

Diese Aufgabe wird erfindungsgemäß mit den kennzeichnenden Merkmalen des Hauptanspruches gelöst. Dabei weist die erfindungsgemäße Schaltvorrichtung eine integrierte Schaltwegbegrenzung auf, die ohne gehäusefeste Anschläge für den Schaltarm und/oder Endanschläge für den Schalthebel zur Verschwenkung des Schaltarmes auskommt. Durch die Ausbildung von zwei Anschlagflächen am Sperrelement, die in der Endstellung der Schwenkbewegung des Schaltarmes an der Schaltwelle anliegen und damit ein Weiterschwenken des Schaltarmes verhindern, wird eine integrierte Schaltwegbegrenzung ermöglicht, so daß ein mechanisches Weiterdrehen der Schaltwelle verhindert wird. Darüber hinaus kann durch diese integrierte Schaltwegbegrenzung der Schalthebel zur Verschwenkung des Schaltarmes ohne Endanschläge oder ähnliche in den Schaltweg eingreifende Mechanismen auskommen. Dies ermöglicht die Kombination der Schaltvorrichtung beispielsweise mit herkömmlichen Schalthebeln, ohne daß aufwendige bauliche Maßnahmen zur Führung des Schalthebels und zur Begrenzung des Schalthebelweges erforderlich sind. Dies ermöglich darüber hinaus den Ersatz von Schaltgetrieben mit herkömmlichem H-Schaltbild durch Schaltgetriebe mit einer erfindungsgemäßen Schaltvorrichtung, ohne daß der im Fahrzeug befindliche Schalthebel ersetzt werden muß. Dieser Schalthebel kann beispielsweise auf an sich bekannte Weise über Seilzüge, Hebelelemente oder ähnliches mit der Schaltvorrichtung gekoppelt werden.

Eine einfache und raumsparende Anordnung dieser Schaltvorrichtung ergibt sich, wenn das Sperrelement eine Öffnung zwischen den beiden Anschlagflächen hat, die von der Schaltwelle durchdrungen wird. Das Sperrelement kann somit auf engstem Bauraum mit der Schaltwelle zusammenwirken. Gleichzeitig kann durch die Schaltwelle eine Führung des Sperrelementes erfolgen. Die Feineinstellung des Schrittschaltwerkes bleibt somit ohne wesentlichen Einfluß auf den Schaltweg.

Das Sperrelement der Schaltvorrichtung kann auf besonders vorteilhafte Weise als Stanzbiegeteil aus einem Flachmaterial gefertigt werden. Dies ermöglicht eine besonders schnelle und preisgünstige Herstellung, die insbesondere für eine Großserienfertigung geeignet ist.

Auf besonders vorteilhafte Weise können aus einem derartigen Sperrelement die Sperrglieder als abgewinkelte Zungen ausgebildet sein.

Weitere Vorteile und vorteilhafte Weiterbildungen der Erfindung ergeben sich aus den Unteransprüchen und der Beschreibung.

Ein Ausführungsbeispiel der Erfindung ist in der nachfolgenden Beschreibung und Zeichnung näher erläutert. Letztere zeigt in
- Fig. 1: eine vereinfachte perspektivische Darstellung der erfindungsgemäßen Schaltvorrichtung,
- Fig. 2: einen Querschnitt durch die Schaltvorrichtung in Neutralstellung,
- Fig. 3: den vereinfachten Querschnitt in der ersten Endstellung der Schaltvorrichtung und
- Fig. 4: den vereinfachten Querschnitt durch die Schaltvorrichtung in der zweiten, gegenüberliegenden Endstellung.

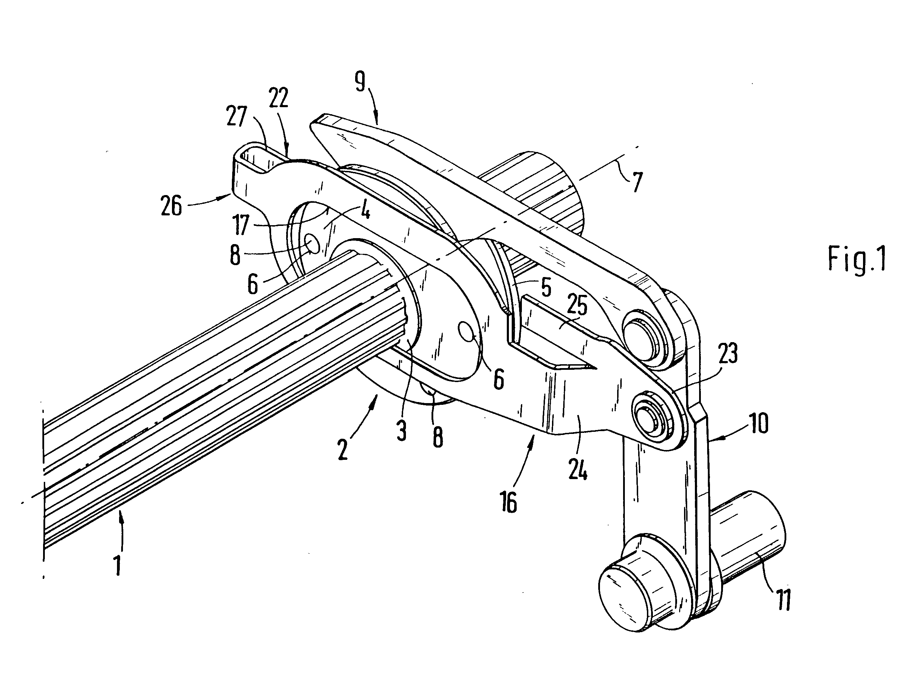

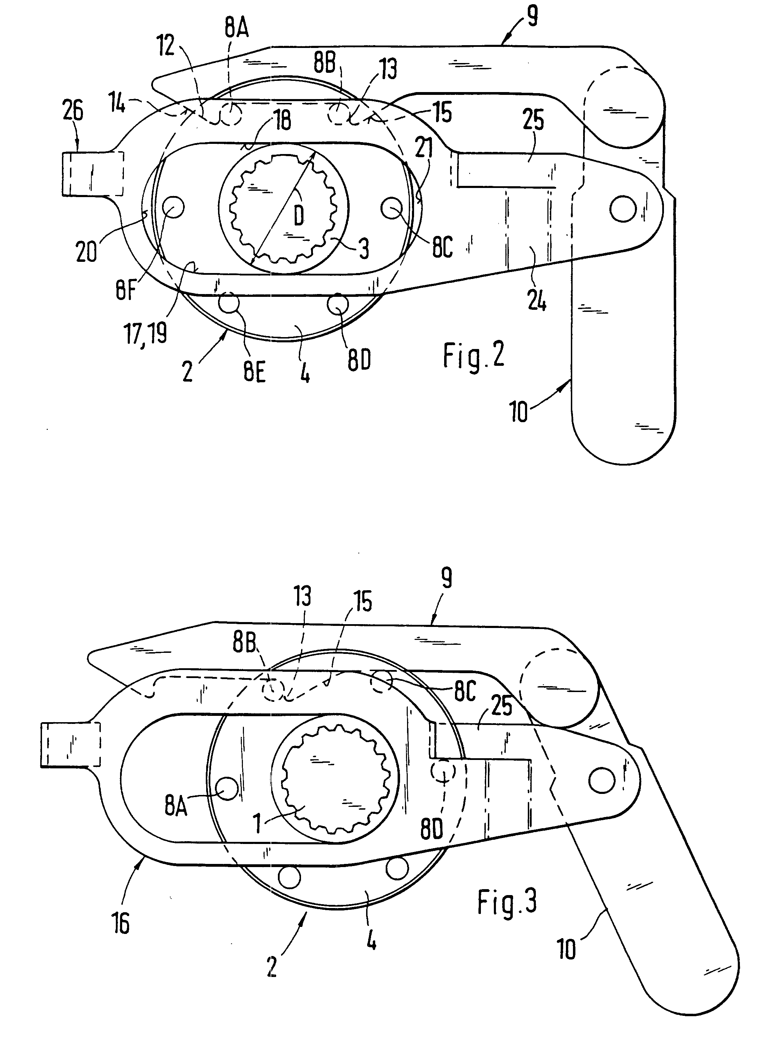

Die in Fig. 1 nur teilweise dargestellte Schaltvorrichtung für ein mehrgängiges Wechselgetriebe eines Kraftfahrzeuges hat eine Schaltwelle 1, die mit einer an sich bekannten, nicht dargestellten Schaltwalze verbunden ist. Diese Schaltwalze weist eine oder mehrere Kurvenbahnen auf, die mit ebenfalls nicht dargestellten Schaltgabeln des Wechselgetriebes zusammenwirken. Beim Verdrehen der Schaltwelle 1 wirkt die Schaltwalze so mit den Schaltgabeln zusammen, daß über die Kurvenbahnen die Drehbewegung der Schaltwalze in eine axiale Bewegung der Schaltgabeln überführt wird. Auf der Schaltwelle 1 ist eine Verdreheinheit 2 geführt, die ein hohlzylindrisches Grundelement 3 aufweist, welches über eine Keilverbindung oder Verzahnung drehfest mit der Schaltwelle 1 verbunden ist. Mit diesem Grundelement 3 sind zwei Scheiben 4 und 5 verbunden, die mit axialem Abstand zueinander angeordnet sind. Die Scheiben 4 und 5 werden von miteinander fluchtenden Bohrungen 6 durchdrungen, die kreisförmig um die Achse 7 der Schaltwelle 1 bzw. der Verdreheinheit 2 angeordnet sind und gleiche Winkelabstände zueinander aufweisen. In den jeweils gegenüberliegenden Bohrungen 6 der Scheiben 4 und 5 sind Stifte 8 befestigt, die als Mitnahmeelement der Verdreheinheit 2 dienen. In diesem Ausführungsbeispiel sind sechs Stifte 8A bis 8F um jeweils 60° zueinander versetzt angeordnet. Die Anzahl und Winkelabstände der Stifte ist abhängig von der Zahl der Getriebegänge des zu schaltenden Wechselgetriebes und vom Verdrehwinkel, der zur Schaltung von einem in den nächsten Getriebegang vorgegeben ist. Die Stifte 8 wirken mit einem Schaltglied 9 zusammen, das schwenkbar an einem Schaltarm 10 geführt ist. Dieser Schaltarm 10 ist um eine Achse 11 schwenkbar. Der Schaltarm 10 ist direkt oder über nicht näher dargestellte Zwischenelemente, wie Seilzüge, Hebelelemente oder ähnliches mit einem nicht näher dargestellten Schalthebel verbunden, durch dessen Verschwenken in einer Schaltebene der Schaltarm 10 um die Achse 11 geschwenkt wird. Das Schaltglied 9 weist zwei beabstandete, als Betätigungselemente für die Verdreheinheit 2 dienende Vorsprünge 12, 13 auf, deren Abstand dem Außenabstand zweier benachbarter Stifte 8A bis 8F entspricht. Die Vorsprünge 12 und 13 liegen in der in Fig. 2 dargestellten Neutralstellung der Schaltvorrichtung jeweils an einem der Stifte 8A bis 8F an. Die den Stiften 8 abgewandten Außenseiten der Vorsprünge 12 und 13 sind als Schrägflächen 14 und 15 ausgebildet.

Unterhalb des Schaltgliedes 9 ist am Schaltarm 10 ein Sperrelement 16 schwenkbar gelagert. Dieses Sperrelement 16 hat eine langgestreckte Öffnung 17 mit zwei gegenüberliegenden Flachseiten 18 und 19 und zwei gegenüberliegenden abgerundeten Enden 20, 21. Die Öffnung 17 wird von der Schaltwelle 1 durchdrungen, wobei die beiden Flachseiten 18 und 19 das Grundelement 3 der Verdreheinheit 2 auf der Außenseite der Scheibe 4 umgreifen. Der Abstand der beiden Flachseiten 18 und 19 entspricht dabei dem Durchmesser D des Grundelementes 3. Der Durchmesser der gerundeten Enden 20 und 21 entspricht ebenfalls dem Durchmesser D des Grundelementes 3. Der mit der Öffnung 17 versehene Abschnitt 22 des Sperrelementes 16 verläuft parallel zu dessen schwenkbar am Schaltarm 10 befestigten Abschnitt 23 und ist über einen abgewinkelten Bereich 24 mit diesem verbunden. Von diesem am Schaltarm 10 befestigten Abschnitt 23 geht oberhalb des abgewinkelten Bereiches 24 ein zungenartiges Bügelelement 25 aus, das in Richtung Verdreheinheit 2 weist. Das gegenüberliegende, freie Ende 26 des Abschnittes 22 ist zweimal rechtwinkelig abgewinkelt und bildet ein zungenartiges Bügelelement 27, das ebenfalls Richtung Verdreheinheit 2 weist. Die beiden Bügelelemente 25 und 27 sind so angeordnet und beabstandet, daß sich die Verdreheinheit 2 zwischen ihnen befindet.

Das Rauf- oder Runterschalten des zugeordneten Schaltgetriebes erfolgt - wie bereits angeführt - durch Verdrehen der mit der Schaltwelle 1 verbundenen Schaltwalze. Das Verdrehen der Schaltwelle 1 wiederum erfolgt durch Verschwenken des Schaltarmes 10, der mit einem Schalthebel im bzw. am Kraftfahrzeug gekoppelt ist. In der in Fig. 2 dargestellten Schaltstellung der Schaltvorrichtung ist ein Getriebegang des Wechselgetriebes eingelegt, der der entsprechenden Drehstellung der Schaltwelle 1 und der Schaltwalze zugeordnet ist. In dieser Neutralstellung der Schaltvorrichtung liegen die Vorsprünge 12 und 13 des Schaltgliedes jeweils an der Außenseite eines der Stifte 8 an. In der hier exemplarisch dargestellten Ausgangslage liegt der Vorsprung 12 am Stift 8A und der Vorsprung 13 am Stift 8B an. Die Position des Sperrelementes 16 in dieser neutralen Schaltstellung ist so, daß sich die Schaltwelle 1 und das Grundelement 3 im mittleren Bereich der Öffnung 17 befinden und die beiden Bügelelemente 25 und 27 einen Abstand zu der Kreisbahn um die Stifte 8 aufweist. Zum Rauf- oder Runterschalten des Wechselgetriebes wird die Schaltwelle 1 und die mit ihr gekoppelte - nicht näher dargestellte - Schaltwalze gegen den Uhrzeigersinn oder im Uhrzeigersinn verdreht. Die Verdrehung der Schaltwelle 1 gegen den Uhrzeigersinn zeigt die Fig. 3. Der Schaltarm 10 ist durch den nicht dargestellten Schalthebel des Kraftfahrzeuges in der in Fig. 3 gewählten Darstellungsrichtung nach links verschwenkt. Durch dieses Verschwenken wird die Verdreheinheit 2 über den Stift 8B und den Vorsprung 13 des Schaltgliedes 19 verdreht. Durch das Verschwenken des Schaltarmes 10 wird gleichzeitig das Sperrelement 16 nach links verschoben. Das Sperrelement 16 wird dabei durch die Öffnung 17 bzw. das Zusammenwirken der beiden Flachseiten 18 und 19 und dem dazwischen angeordneten Grundelement 3 geführt. In der Endstellung der Verschwenkbewegung des Schaltarmes nach links liegt das rechte gerundete Ende 21 der Öffnung 17 am Grundelement 3 an, so daß ein weiteres Verschwenken des Schaltarmes verhindert wird. Gleichzeitig ragt in dieser Endstellung der Schwenkbewegung des Schaltarmes 10 das Bügelelement 25 so zwischen die beiden Scheiben 4 und 5, daß es sich oberhalb des Stiftes 8D befindet, so daß ein weiteres Verdrehen der Verdreheinheit 2 gegen den Uhrzeigersinn verhindert wird. Beim Zurückschwenken des Schaltarmes 10 in die in Fig. 2 dargestellte Neutralstellung verbleiben die Schaltwelle 1 und die Verdreheinheit 2 in ihrer eingenommenen Position, die dem neu eingelegten Getriebegang entspricht. Beim Zurückschwenken des Schaltarmes 10 wird das Sperrelement 16 wiederum auf dem Grundelement 3 der Verdreheinheit 2 geführt. Das Schaltglied 9 wird durch das Verschwenken des Schaltarmes 10 nach rechts bewegt, wobei die Schrägfläche 15 des Vorsprunges 13 ein Anheben des Schaltgliedes 9 über den Stift 8C bewirkt. Bei Erreichen der Neutralstellung (Fig. 2) des Schaltarmes 10 senkt sich aufgrund der Schwerkraft und/oder unter der Einwirkung einer nicht dargestellten Feder das Schaltglied 9 so ab, daß sowohl der Vorsprung 12 als auch der Vorsprung 13 an der Außenseite der Stifte 8B und 8C anliegen.

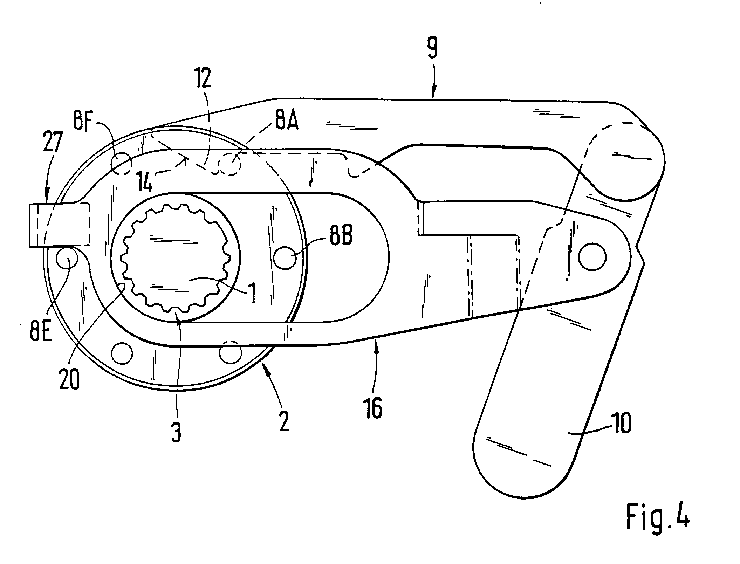

Das in Fig. 4 dargestellte Verdrehen der Schaltwelle 1 im Uhrzeigersinn erfolgt auf analoge Weise durch Verschwenken des Schaltarmes 10 nach rechts. Das Schaltglied 9 zieht dabei über den Vorsprung 12 am Stift 8A, so daß die Verdreheinheit 2 und damit die Schaltwelle 1 im Uhrzeigersinn verdreht werden. Gleichzeitig wird durch das Verschwenken des Schaltarmes 10 das Sperrelement 16 nach rechts bewegt, bis das linke gerundete Ende 20 am Außenumfang des Grundelementes 3 anliegt. Ein weiteres Verschwenken des Schwenkarmes 10 wird damit verhindert. In dieser Endstellung der Schwenkbewegung ragt das Bügelelement 27 so zwischen die beiden Scheiben 4 und 5, daß es sich oberhalb des Stiftes 8E befindet und ein Weiterdrehen der Verdreheinheit 2 im Uhrzeigersinn verhindert. Durch Verschwenken des Schaltarmes 10 in die in Fig. 2 dargestellte Neutralstellung wird wiederum die Ausgangsposition für den nächsten Schaltvorgang eingenommen. Bei diesem Zurückschwenken des Schaltarmes 10 wird das Schaltglied 9 durch das Zusammenwirken der Schrägfläche 14 am Stift 8F angehoben, bis in der Neutralstellung das Schaltglied 9 so abgesenkt wird, daß wiederum beide Vorsprünge 12 und 13 an den Stiften 8F bzw. 8A anliegen.

## Patentansprüche

1. Schaltvorrichtung mit Überschaltsperre für ein mehrgängiges Wechselgetriebe eines Kraftfahrzeuges mit einer Schaltwelle (1), die über einen schwenkbaren Schaltarm (10) und ein damit gekoppeltes Schaltglied (9) schrittweise verdreht wird, dessen Betätigungselemente (12, 13) an Mitnahmeelementen (8) der Schaltwelle (1) angreifen, und mit einem Sperrelement (16) mit mindestens einem Sperrglied (25, 27), das in Abhängigkeit von der Schaltstellung des Schaltarmes (10) zwischen zwei benachbarte Mitnahmelemente bewegt wird, **dadurch gekennzeichnet, daß** an dem Sperrelement (16) zusätzlich zwei Anschlagflächen (20, 21) ausgebildet sind, die in der Endstellung der Schaltbewegung des Schaltarmes (10) an der Schaltwelle (1, 3) anliegen und damit ein Weiterschwenken des Schaltarmes (10) verhindern.

2. Schaltvorrichtung nach einem der vorangehenden Ansprüche, **dadurch gekennzeichnet, daß** das Sperrelement (16) eine Öffnung (17) zwischen den beiden Anschlagflächen (20, 21) hat, die von der Schaltwelle (1) durchdrungen wird.

3. Schaltvorrichtung nach einem der vorangehenden Ansprüche, **dadurch gekennzeichnet, daß** das Sperrelement (16) schwenkbar am Schaltarm (10) befestigt ist.

4. Schaltvorrichtung nach einem der vorangehenden Ansprüche, **dadurch gekennzeichnet, daß** das Sperrelement (16) zwei jeweils als Sperrglied wirkende Bügelelemente (25, 27) aufweist, zwischen denen die Öffnung (17) angeordnet ist.

5. Schaltvorrichtung nach einem der Ansprüche 2 bis 4, **dadurch gekennzeichnet, daß** die Öffnung (17) als langgestrecktes Fenster mit zwei Flachseiten (18, 19) und zwei abgerundeten Enden (20, 21) gebildet ist, und daß die beiden Anschlagflächen durch die einander gegenüberliegenden, gerundeten Enden des Fensters gebildet sind.

6. Schaltvorrichtung nach einem der vorangehenden Ansprüche, **dadurch gekennzeichnet, daß** das Sperrelement (16) als Stanzbiegeteil aus einem Flachmaterial gefertigt ist.

7. Schaltvorrichtung nach einem der Ansprüche 4 bis 6, **dadurch gekennzeichnet, daß** die Bügelelemente (25, 27) durch abgewinkelte Zungen ausgebildet sind.

## Claims

1. A gear-shift device with an override lock for a variable multi-speed gearbox of a motor vehicle with a selector shaft (1) which is turned stepwise via a pivotable shifting arm (10) and a shifting component (9) coupled thereto, the control members (12, 13) of which engage driving members (8) of the selector shaft (1), and with a locking member (16) with at least one locking component (25, 27), which is moved between two adjacent driving members depending on the shift position of the shifting arm (10), **characterised in that** two stop faces (20, 21) are additionally formed on the locking member (16), the said stop faces (20, 21) being adjacent to the selector shaft (1, 3) in the end position of the shift movement of the shifting arm (10) and thus preventing further pivoting of the shifting arm (10).

2. A gear-shift device according to one of the preceding claims, **characterised in that** the locking member (16) has an opening (17) between the two stop faces (20, 21), through which the selector shaft (1) passes.

3. A gear-shift device according to one of the preceding claims, **characterised in that** the locking member (16) is pivotally attached to the shifting arm (10).

4. A gear-shift device according to one of the preceding claims, **characterised in that** the locking member (16) has two clip members (25, 27), in each case acting as a locking component, between which the opening (17) is arranged.

5. A gear-shift device according to one of Claims 2 to 4, **characterised in that** the opening (17) is in the form of an elongated window with two flat sides (18, 19) and two rounded ends (20, 21), and in that the two stop faces are formed by the mutually opposed rounded ends of the window.

6. A gear-shift device according to one of the preceding claims, **characterised in that** the locking member (16) is manufactured from a flat material as a stamped bent component.

7. A gear-shift device according to one of Claims 4 to 6, **characterised in that** the clip members (25, 27) are formed by angled tongues.

## Revendications

1. Dispositif de commutation avec limitation de commutation pour une boîte de changement de vitesses à plusieurs rapports d'un véhicule automobile, comportant un arbre de commande (1) que l'on fait tourner pas à pas au moyen d'un arbre de commande 10 pivotant et d'un organe de commande 9 accouplé à celui-ci et dont les éléments d'actionnement 12, 13 agissent sur des éléments d'entraînement 8 de l'arbre de commande 1, et comportant un élément d'arrêt (16) avec au moins un organe d'arrêt (25, 27) qui est déplacé entre deux éléments d'entraînement voisins, en fonction de la position de commutation du bras de commande 10, **caractérisé en ce que** sur l'élément d'arrêt (16) sont formées en supplément deux surfaces de butée (20, 21) qui, en position terminale du mouvement de commande du bras de commande (10), s'appliquent contre l'arbre de commande (1, 3) et empêchent ainsi que le bras de commande (10) ne poursuive son pivotement.

2. Dispositif de commutation selon l'une des revendications précédentes, **caractérisé en ce que** l'élément d'arrêt (16) présente entre les deux surfaces de butée (21), une ouverture (17) qui est traversée par l'arbre de commande (1).

3. Dispositif de commutation selon l'une des revendications précédentes, **caractérisé en ce que** l'élément d'arrêt (16) est fixé sur le bras de commande (10) de manière à pouvoir pivoter.

4. Dispositif de commutation selon l'une des revendications précédentes, **caractérisé en ce que** l'élément d'arrêt (16) présente deux éléments en étrier (25, 27) qui agissent chacun en tant qu'organe d'arrêt et entre lesquels est disposée l'ouverture (17).

5. Dispositif de commutation selon l'une des revendications 2 à 4, **caractérisé en ce que** l'ouverture (17) est réalisée en tant que fenêtre allongée avec deux côtés plats (18, 19) et deux extrémités (20, 21) arrondies, et en ce que les deux surfaces de butée sont formées par les extrémités arrondies de la fenêtre, opposées l'une à l'autre.

6. Dispositif de commutation selon l'une des revendications précédentes, **caractérisé en ce que** l'élément d'arrêt (16) est réalisé en tant qu'élément estampé et plié dans un matériau plat.

7. Dispositif de commutation selon l'une des revendications 4 à 6, **caractérisé en ce que** les éléments en étrier (25, 27) sont formés par des languettes coudées.
